# EUROPEAN PATENT SPECIFICATION

(11) **EP 2 670 259 B1**
(45) Date of publication and mention of the grant of the patent: **24.06.2015**
(21) Application number: 12703012.0
(22) Date of filing: 27.01.2012
(51) Int. Cl.: A23L 1/025, A23L 1/01, H05B 6/78, A23L 1/217, A23L 1/307

(54) **MICROWAVE APPARATUS AND METHOD IN THE MANUFACTURE OF LOW OIL POTATO CHIPS**
MIKROWELLENAPPARAT UND HERSTELLUNGSMETHODE FÜR KARTOFFELCHIPS MIT NIEDRIGEM FETTGEHALT
APPAREIL À MICRO-ONDES ET PROCÉDÉ DE FABRICATION DE CHIPS DE POMME DE TERRE À FAIBLE TENEUR EN GRAISSE

(30) Priority: 31.01.2011 GB 201101629
(43) Date of publication of application: 11.12.2013
(73) Proprietor: Frito-Lay Trading Company GmbH, 3011 Berne (CH)
(72) Inventor: HERBERT, Oliver, Beeston Nottingham NG9 4ED (GB); BAILEY, Richard, Andrew, Market Harborough Leicestershire LE17 7AS (GB)
(74) Representative: Jenkins, Peter David
(86) International application number: PCT/EP2012/051350
(87) International publication number: WO 2012/104220

(56) References cited:
- US-A- 5 298 707
- US-A1- 2008 026 118
- US-A1- 2008 138 480

## Description

This invention relates to a microwave apparatus and a method for dehydrating snack foods using microwave energy. In particular, the invention relates to the controlled use of microwave energy applied to potato slices during the manufacture of potato chips, more particularly low oil potato chips which have not been fried but have been cooked by the microwave energy.

It has been known for many years to produce potato chips from slices of potato which are fried in oil, usually vegetable oil. Typical conventional potato chips have an oil content of about 30 to 35 wt% oil, based on the total weight of the potato chip. Potato chips exhibit specific organoleptic properties, in combination with visual appearance, to the consumer. The consumer desirous of purchasing a potato chip has a clear expectation of these product attributes in the product.

There is a general desire among snack food manufacturers, consumers and regulatory authorities for healthier food products. In the snack food industry, this has led to a desire for lower fat products. However, even though there may be a general consumer awareness of the benefits of eating lower fat versions of, or alternatives to, existing snack food products, the consumer generally requires the product to have desirable attributes such as texture and flavour. Even if a snack food product is produced which has high nutritional attributes, unless it also has the texture and flavour required by the consumer, the product would not successfully provide the consumer with an acceptable product to replace previous, less healthy snack food products. The challenge among snack food manufacturers is to produce nutritional or more healthy foods which provide the consumer with an improved taste and sensation experience, or at the very least do not compromise on taste and sensation as compared to the consumer's expectation for the particular product or class of products purchased.

There are in the market so-called lower oil snack food products, including potato chips and other products. Some of these processes are produced by modified frying processes using different frying temperatures than those conventionally employed, or cooking processes other than frying, such as baking. Some of these products produce snack foods with low oil, even as low as 5wt%, but the snack food product is not regarded by the consumer to be an acceptable alternative to a potato chip, because the product cannot exhibit the organoleptic properties, in combination with the visual appearance, of a potato chip.

WO-A-2008/011489 and WO-A-2009/091674 in the name of Frito-Lay Trading Company GmbH disclose processes for making a healthy snack food. In those processes, a snack food is made so as to have an appearance and taste similar to conventional fried snack products, such as a potato chip. The potato slices are subjected to a sequence of steps which avoids frying of the slices in oil, and the result is a low fat potato chip.

In particular, these specifications disclose the use of microwave cooking of potato slices which have been preconditioned, for example by being treated in oil. Prior to the microwave cooking process, the potato slices are flexible, and have a typical thickness of 1 to 2.5 mm. The microwave cooking rapidly, or explosively, dehydrates the potato slices to achieve low moisture content in a drying step which simulates the conventional frying dehydration rate. It is disclosed that the microwave drying may comprise linear belt or rotary microwave drying. The rapid microwave dehydration rigidifies the cooked potato slices, so that they have a crispness resembling that of typical fried potato chips. Additional final drying steps may be employed, for example using microwave drying.

The potato slices are fed into the microwave cavity on a conveyor, and the input product flow tends to have an uneven or non-uniform slice distribution. Such a distribution results from the original potato feed or from the preceding treatment steps, which may cause the input product flow to come in surges or to be unevenly or non-uniformly distributed across the width of the conveyor. In particular, there may be overlapping or clumping together of potato slices prior to the microwave treatment which explosively dehydrates the potato slices. Such an uneven or non-uniform product distribution for the microwave input changes the amount of product in the conveyor and therefore correspondingly changes the load in the microwave cavity, for example the load changing significantly over a period of less than one minute. The load represents the total amount of water at any given time within the microwave cavity which is energised by the microwave during the microwave treatment of the products within the cavity. Such a variation of the load within the microwave cavity can cause a number of problems, for example uneven drying of the potato slices to form the potato chips, insufficient drying, and/or excess microwave energy within the cavity for the current load, causing arcing.

One particular problem with the manufacture of potato chips from potato slices is that it is difficult to provide a completely uniform product flow. Also, the slices vary in shape and dimension, so that the cooked slices exhibit the random three-dimensional shapes of potato chips.

There is therefore a need to control the application of the microwave energy during such an explosive dehydration process so that the product is substantially uniformly treated. For commercially acceptable snack foods, in particular potato chips, the individual chips must exhibit substantially the same crispness, moisture content and organoleptic properties, within very close tolerances. For products which have been subjected to microwave cooking, it is necessary for a very high proportion, preferably 100%, of the individual snack food products not to exhibit any cooking flaws, for example burning. When a consumer opens a packet of snack food, they expect a high level of product quality and uniformity of the plural snack food pieces within the packet.

There is accordingly still a need for an apparatus and method for efficiently and reliably manufacturing, in a cost effective manner, a low fat potato chip which has not been fried but has organoleptic properties, in combination with the visual appearance, of a conventional fried potato chip, and has very high product uniformity.

For the manufacture of snack foods, in particular the microwave treatment of potato slices in the manufacture of potato chips, more particularly low oil potato chips which have not been subjected to a frying process, it is necessary to use a controlled microwave cooking or drying treatment which explosively dehydrates the potato slices. The invention aims to provide a microwave treatment apparatus and method which can provide very high product uniformity within very close tolerances for crispness, moisture content and organoleptic properties.

The present invention accordingly provides an apparatus for the manufacture of snack foods, the apparatus comprising a conveyor having an upstream end and a downstream end, a flat bed microwave apparatus for cooking products conveyed through the microwave apparatus by the conveyor, the microwave apparatus having an upstream end and a downstream end defining at least one elongate cavity therebetween and the conveyor extending through the at least one elongate cavity, the microwave apparatus being configured to define a plurality of successive independent microwave zones between the upstream and downstream ends of the microwave apparatus, each zone having a respective microwave attenuator at an upstream inlet and at a downstream outlet, the microwave zones comprising a first preheating zone located towards the upstream end of the microwave apparatus, at least one second explosive dehydration zone located downstream of the first preheating zone, and a third moisture levelling zone located downstream of the at least one second explosive dehydration zone, wherein the microwave apparatus is adapted respectively to provide first, second and third microwave power values to the respective first, second and third zones, the first microwave power value being lower than the second microwave power value.

The present invention further provides a method for the manufacture of snack foods, the method comprising the steps of:
(a) conveying a plurality of products to form snack food products through a flat bed microwave apparatus, the microwave apparatus being configured to define a plurality of successive independent microwave zones between the upstream and downstream ends of the microwave apparatus, each zone having a respective microwave attenuator at an upstream inlet and at a downstream outlet of the respective zone;
(b) preheating the products in a first preheating microwave zone located towards an upstream end of the microwave apparatus, the first zone having a first microwave power value;
(c) explosively dehydrating the products in at least one second explosive dehydration microwave zone located downstream of the first preheating zone, the explosive dehydration drying a body of the products at a first drying rate, the second zone having a second microwave power value higher than the first microwave power value; and
(d) drying the products in a third drying microwave zone located downstream of the at least one second explosive dehydration zone.

Preferred features are defined in the dependent claims.

The present inventors have found that the use of specific sequence of zones for preheating, explosively dehydrating, and drying the products, for example potato slices which have previously been lipophilically pre-conditioned in oil and then subjected to a surface de-oiling, can provide significantly enhanced product uniformity, which is essential for snack food products which are to be acceptable to the consumer.

During the explosive dehydration the microwave energy energises water to form steam and the rate of generation of steam is greater than the rate of mass transfer of steam through the product matrix, so that the explosively generated steam ruptures the product matrix, causing texturing of the product surface. Such surface texturing provides organoleptic properties to the final product.

This explosive dehydration requires a high level of microwave energy. The inventors have found that particular pre-treating and post-treating steps are required to provide the desired product properties and, importantly, uniformity over a commercially implementable product distribution. It is difficult to carry out these processes on a large scale commercial production basis and retain a high level of product uniformity which is required by the consumer.

If the products were all maintained 100% physically separate during the explosive dehydration then it is less likely that problems due to product contact, such as arcing or burning, would occur. However, since such an individual product separation during the manufacture of products such as snack foods, in particular potato chips, may not be commercially or technically feasible, at least to the extent of ensuring 100% separation, there has been a need to provide a process which can readily employ the explosive dehydration process on a bulk production basis, which cannot realistically avoid product-to-product contact at high production throughputs, yet still achieve product uniformity.

In developing this invention, the inventors and their colleagues have achieved a high level of product separation, but not guaranteed 100% separation, for some bulk-manufactured snack food products, such as the manufacture of potato chips from potato slices.

However, the present inventors have also found that as an addition or alternative to developing dedicated product handling systems and conveyor apparatus which require significant development to handle bulk quantities of flexible, wet and slippery products such as potato slices, with the aim of achieving 100% slice separation through the microwave apparatus, the microwave apparatus and production methods can be modified to mitigate any problems in product quality or uniformity resulting from inadvertent product contact.

Yet further, moisture variability between the incoming slices is difficult to eliminate. The amount of moisture in or on a product affects the microwave coupling, and if the incoming products have different surface and/or bulk moisture content then it is difficult to achieve uniform dehydration and ultimate uniform product quality and moisture content.

Therefore the combination of potential slice contact and moisture variability in the input products for the microwave apparatus provide extreme challenges for achieving product uniformity on a bulk manufacturing line for snack foods.

The apparatus and method of the present invention can accommodate slice contact and moisture variability during the explosive dehydration and can maintain product quality and uniformity at high volume production rates of snack food products, such as potato chips. The controlled preheating, explosively dehydrating, and drying can therefore accommodate variability in the input products, for example which have variable surface moisture and product distribution on the conveyor, such as partially overlapping products.

The pre-treatment reduces surface moisture across the distribution under controlled conditions and drives down the surface moisture to a uniform level, so that in the subsequent explosive dehydration if there is any inadvertent contact between the products then problems of arcing or burning are minimised. Also, the pre-treatment provides that the products are more uniformly explosively dehydrated, and greater final product uniformity is achieved.

The division of the explosive dehydration controls the application of microwave energy to the product distribution during the explosive dehydration and provides a more uniform treatment across the distribution.

The drying step after the explosive dehydration provides a moisture levelling effect across the distribution, so that the final snack food product has a very close tolerance moisture level, at a defined end point moisture content, which is critical for consumer acceptance.

By providing distinct zones, which have entirely separate microwave power values associated with respective loads in the respective microwave cavity due to the attenuation between the adjacent zones, each cavity can be closely controlled to provide a specific respective dehydration rate, and the dehydration rates are not compromised by adjacent zones. The driving force for the predetermined dehydration rate can be accurately maintained in each cavity. Also, by providing physically adjacent zones and cavities, even abutting zones and cavities, as the product moves sequentially down the zones no undesired or uncontrolled cooling occurs, and so the product is not liable to inadvertent structure collapse. This arrangement of the zones and cavities also enhances product uniformity.

This can enhance the product quality and/or product uniformity of snack foods, particularly potato chips produced by a microwave cooking step, such as an explosive dehydration step discussed above, which not only have low oil but also have the combination of flavour, organoleptic properties and shelf life in a non-fried potato chip which is equal or superior in consumer acceptance to conventional fried potato chips.

Subsequently, the potato slices are further dried in a non-microwave drying step, in particular in a convection drying step during which the potato slices are subjected to heated air or other gas such as nitrogen. The potato slices entering the convection drying step typically have a water content of from 5 to 8 wt% and the products leaving the convection drying step typically have a water content of from 1 to 3 wt%, optionally from 1.5 to 2 wt%, each weight being based on the total weight of the product including the respective water content.

Such a final moisture content of the resultant potato chips is uniformly present across the potato chip distribution, so that when the potato chips are packaged, the consumer experiences acceptable product uniformity for the packaged product. The final typical moisture content of from 1 to 3 wt%, optionally from 1.5 to 2 wt%, is a typical moisture content of conventional fried potato chips.

This particular sequence of steps provides a novel potato chip, since the potato chip has an novel oil distribution, particularly with regard to surface oil, and a novel combination of organoleptic properties, being at least partly provided by a microstructure which is light and porous due to the particular pre-treatment and dehydration steps, even without frying, allowing the bulk of the oil to be contained within the chip, away from the surface.

This particular sequence of steps also enhances the product quality and/or product uniformity of snack foods, particularly potato chips produced by a microwave cooking step, such as an explosive dehydration step discussed above, which not only have low oil, and low surface oil in accordance with the invention, but also have the combination of flavour, organoleptic properties and shelf life in a non-fried potato chip which is equal or superior in consumer acceptance to conventional fried potato chips.

An embodiment of the present invention will now be described, by way of example only, with reference to the accompanying drawings in which:

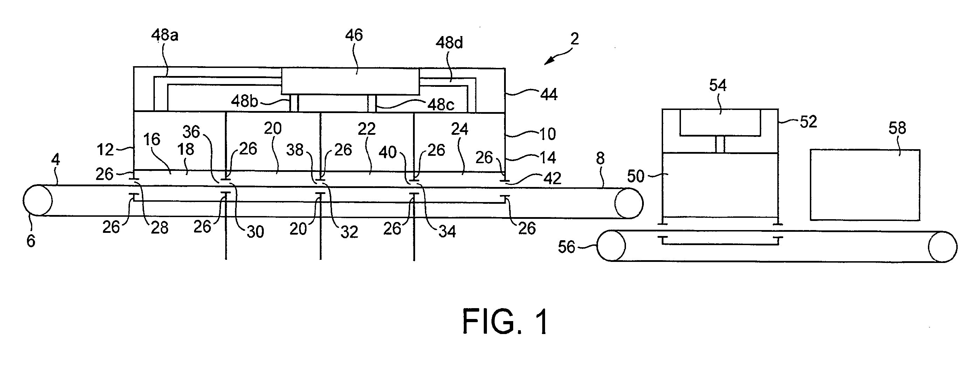

Figure 1 is a schematic perspective view of an apparatus for manufacturing snack foods according to an embodiment of the present invention.

An embodiment of an apparatus for manufacturing snack foods, the apparatus incorporating a microwave apparatus, in particular potato chips from potato slices, according to one aspect of the present invention is illustrated in Figure 1. A conveyor is employed to feed potato slices to a microwave apparatus for cooking and explosively dehydrating the potato slices in order to produce potato chips, which have not been fried, as for a conventional potato chip.

In particular, an apparatus, designated generally as 2, for the manufacture of snack foods, such as potato chips from potato slices, comprises a first conveyor 4, such as an endless belt conveyor, having an upstream end 6 and a downstream end 8. The conveyor 4 may have a substantially horizontal orientation or may be slightly inclined to the horizontal. A flat bed microwave apparatus 10 for cooking products conveyed through the microwave apparatus 10 by the conveyor 4 has an upstream end 12 and a downstream end 14. The opposed upstream and downstream ends 12, 14 define at least one elongate cavity 16 therebetween. The conveyor 4 extends through the at least one elongate cavity 16.

The microwave apparatus 10 is configured to define a plurality of successive independent microwave zones 18, 20, 22, 24 between the upstream and downstream ends 12, 14 of the microwave apparatus 10. Each zone 18, 20, 22, 24 has a respective microwave attenuator 26 at an upstream inlet 28, 30, 32, 34 and at a downstream outlet 36, 38, 40, 42. The microwave attenuator 26 may comprise an array of choke pins or a tunnel, both of which are known per se to those skilled in the art.

The microwave zones 18, 20, 22, 24 comprise a first preheating zone 18 located towards the upstream end 12 of the microwave apparatus 10. At least one second explosive dehydration zone 20, 22 is located downstream of the first preheating zone 18. A third moisture levelling zone 24 is located downstream of the at least one second explosive dehydration zone 20, 22.

The first zone 18, second zones 20, 22 and third zone 24 are assembled in a common housing 44 together with a common microwave generator 46, with waveguides 48a, 48b, 48c, 48d adapted to transmit respective proportions of the microwave energy from the common microwave generator 46 to the respective first, second and third zones 18, 20, 22, 24.

In an alternative embodiment, not illustrated, the first, second and third zones 18, 20, 22, 24 are defined by respective housings, each housing having a respective microwave generator.

A fourth microwave drying zone 50 is located downstream of the third zone 24. The fourth zone 50 is defined by a second flat bed microwave apparatus 52, having a respective microwave generator 54.

A second conveyor 56, such as an endless belt conveyor, is provided for conveying products through the fourth zone 50. The second conveyor 56 may have a substantially horizontal orientation or may be slightly inclined to the horizontal. The first conveyor 4 is arranged to deposit products on the second conveyor 56. The second conveyor 56 is adapted to convey products at a higher mass flow rate, and optionally at a deeper bed depth, than the first conveyor 4.

The conveyor 4 through the microwave apparatus 10 has a speed control adapted, together with the length of the first, second and third zones 18, 20, 22, 24, to convey products thereon through the first, second and third zones 18, 20, 22, 24 in a total period of from 40 to 100 seconds, optionally from 70 to 90 seconds, further optionally about 80 seconds. The second conveyor 56 has a speed control adapted, together with the length of the fourth zone 50, to convey products thereon through the fourth zone 50 in a period of from 90 to 180 seconds, optionally from 100 to 150 seconds, further optionally about 120 seconds.

A convector drying apparatus 58 is provided for drying the conveyed products downstream of the fourth zone 50. The second conveyor 56 conveys products through the convector drying apparatus 58, which dries the products further using heated air or other gas such as nitrogen.

The microwave apparatus 10 is adapted respectively to provide first, second and third microwave power values to the respective first, second and third zones 18, 20, 22, 24.

Preferably, there are plural, for example two, successive second explosive dehydration zones. In each of the second zones 20, 22 the second microwave power value is preferably from 1.25 to 5 times, optionally from 1.5 to 4 times, further optionally from 1.5 to 2.5 times, higher than the first microwave power value. In all of the second zones 20, 22 the total second microwave power value is preferably from 2 to 8 times, optionally from 2.5 to 6 times, further optionally from 3 to 5 times, higher than the first microwave power value.

The second microwave power value is higher than the third microwave power value. Preferably, the second microwave power value is from 1.1 to 2 times, optionally from 1.25 to 1.75 times, further optionally about 1.5 times, higher than the third microwave power value.

The third microwave power value is higher than the first microwave power value. Preferably, the third microwave power value is from 1.5 to 2.5 times, optionally from 1.75 to 2.25 times, further optionally about 2 times, higher than the first microwave power value.

The fourth drying zone 50 has a fourth microwave power value which is lower than the first microwave power value. The first microwave power value is from 1.25 to 2.5 times, optionally from 1.5 to 2.25 times, further optionally from 1.5 to 1.75 times, higher than the fourth microwave power value.

In the method for the manufacture of snack foods, such as potato chips from potato slices, the plurality of products, such as potato slices, to form snack food products, such as potato chips, is conveyed through the flat bed microwave apparatus 10. The products are preheated in the first preheating zone 18, then explosively dehydrated in the at least one second explosive dehydration zone 20, 22, the products being explosively dehydrated at a first drying rate, and then dried in the third drying zone 24.

When the products are potato slices, the potato slices have been randomly delivered onto the conveyor 4 but with a product flow along and across the conveyor 4 so as to provide a substantially constant product flow, but with less than 100 % uniformity and some slice overlap. The potato slices are typically delivered onto the conveyor 4 in a slice distribution so as to have no more than about 50% of the slices overlapping with an adjacent slice, with any such overlap to be no more than about 50% of the slice dimension, and with no more than two slices being stacked one upon the other on the conveyor 4. This substantially provides a monolayer of potato slices across the length and width of the conveyor 4, but with some overlapping and consequential variation of microwave load along and across the conveyor 4.

The potato slices typically have a thickness of 1 to 2.5 mm, more typically about 1.3 mm (51 thousandths of an inch). Since the potato slices are thin and flexible, they are readily able to overlap each other. This means that the flow rate of the potato slices along the manufacturing line, and in particular through specific apparatus in the manufacturing line, such as the microwave apparatus 10, can vary over a short period of time, for example less than one minute, with potential deterioration in product quality and/or uniformity.

That is why the microwave apparatus 10 is divided into a series of independent zones. The zones divide the dehydration and explosive dehydration of the products into specific independent and successive operations, with the input microwave power being controlled so as to cause, in each respective zone, the desired surface or bulk dehydration at the desired rate. By control of these various drying rates, the moisture content of the final products can be very uniform, for example a moisture content at a values selected within the range of 1.5 to 2 wt% water based on the weight of the final snack food product prior to seasoning, with a very high product uniformity, for example the moisture content varying within a batch by as little as +/- 0.1 wt% water.

Such moisture control is accompanied by texture control, resulting in products which have a very uniform texture, and accordingly uniform organoleptic properties to the consumer.

The explosive dehydration causes texture to be developed in the product. Since the products entering the second explosive dehydration zones have a uniform moisture profile, with regard to surface moisture and bulk moisture, the explosive dehydration causes a more uniform bulk dehydration, and more uniform texture. Such uniformity is enhanced by providing plural second explosive dehydration zones, so that the microwave energy is evenly distributed during the explosive dehydration.

The microwave preheating/surface drying step has not been preceded by any air heating step. The microwave preheating/surface drying step is carried out on wet products, such as potato slices which have been subjected to a lipophilic pre-conditioning step in oil followed by a de-oiling step, as discussed above. Consequently, the surface of the products has not been subjected to any case hardening, which would cause a crystallised layer of starch on the product surface, which in turn would reduce moisture transmission through the surface layer. Microwave treatment would not cause such case hardening.

Consequently, the preheating step does not cause case hardening and in the subsequent bulk dehydration using explosive dehydration the moisture can readily be uniformly transmitted through the surface, which enhances product uniformity.

The zones and their respective microwave power outputs are configured to achieve controlled preheating of the products at a relatively slow heating rate, which causes any surface moisture to be driven off. The relatively slow heating rate avoids premature explosive dehydration of some initially drier products. Also, the lower microwave power reduces the possibility of arcing occurring on some products which may have a wetter surface, both in the first zone and in the higher energy second zone. The result is that the products leaving the first preheating zone and entering the second cooking zone(s) are uniformly surface-dried and preheated, but not prematurely cooked.

In the second explosive dehydration zone(s), the products are explosively dehydrated at a high drying rate to achieve bulk dehydration and product shrinkage, which reduces any product contact and overlap.

In the third zone the products are dried at a lower rate under reduced power as compared to the second zone(s). This provides uniformly dried products, and the drying can be controlled to achieve a very accurate end point for the moisture, uniformly across the products.

The power outputs in the zones are selected based on the mass flow rate of products, such as potato slices, conveyed through the microwave apparatus 10. The first preheating zone 18 has a microwave power output of from 0.05 to 0.3 kW, optionally 0.1 to 0.15 kW, further optionally about 0.14 kW, per kilogram of products per hour conveyed into the first preheating zone 18. Each second explosive dehydration zone 20, 22 has a microwave power output of from 0.15 to 0.35 kW, optionally 0.2 to 0.3 kW, further optionally about 0.25 kW, per kilogram of products per hour conveyed into the first preheating zone 18. The third drying zone 24 has a microwave power output of from 0.1 to 0.3 kW, optionally 0.15 to 0.25 kW, further optionally about 0.2 kW, per kilogram of products per hour conveyed into the first preheating zone 18.

The first, second and third zones 18, 20, 22, 24 have a total microwave power output of from 0.5 to 1.1 kW, optionally 0.75 to 1.0 kW, further optionally about 0.8 kW, per kilogram of products per hour conveyed into the first preheating zone 18. Typically, the first, second and third zones 18, 20, 22, 24 have a ratio of the microwave power output of about 1:6:2. If there are plural second explosive dehydration zones 20, 22, the microwave power output for the second zone may be divided between the second zones. For example, with two second zones the power outputs may be in a ratio of 1:3:3:2 for the first, second, second and third zones.

Thereafter, the products are dried in the fourth microwave drying zone 50 located downstream of the third zone 24. The fourth drying zone 50 has a fourth power value which is lower than the first microwave power value. The fourth zone 50 has a microwave power output of from 0.4 to 0.12 kW, optionally 0.06 to 0.1 kW, further optionally about 0.08 kW, per kilogram of products per hour conveyed into the first preheating zone 18.

The products are conveyed through the fourth zone 50 at a higher mass flow rate than through the first, second and third zones 18, 20, 22, 24. The products are conveyed through the fourth zone 50 as a second bed of the products, the second bed being deeper than a first bed of the products conveyed through the first, second and third zones 18, 20, 22, 24. This can lower the footprint of the manufacturing line. Since the products have a lower moisture they are less likely be subject to arcing and there is greater moisture uniformity in the product feed entering the fourth zone. Accordingly the mass flow rate can be increased and the product bed on the conveyor may be deepened.

The products entering the first zone 18 have a water content of at least 30 wt% and the products leaving from the third drying zone 24 have a water content of from 10 to 15 wt%, each weight being based on the total weight of the product including the respective water content. The products are conveyed through the first, second and third zones 18, 20, 22, 24 in a period of from 60 to 100 seconds, optionally from 70 to 90 seconds, further optionally about 80 seconds.

The products entering the fourth zone 50 from the third zone 24 have a water content of from 10 to 15 wt% and the products leaving from the fourth zone 50 have a water content of from 5 to 8 wt%, each weight being based on the total weight of the product including the respective water content. The products are conveyed through the fourth zone 50 in a period of from 90 to 180 seconds, optionally from 100 to 150 seconds, further optionally about 120 seconds.

The products are then further dried in the convector drying apparatus 58 downstream of the fourth zone. The products entering the convector drying apparatus 58 have a water content of from 5 to 8 wt% and the products leaving from the convector drying apparatus 58 have a water content of from 1 to 3 wt%, optionally from 1.5 to 2 wt%, each weight being based on the total weight of the product including the respective water content.

Various modifications to the illustrated embodiment will be readily apparent to those skilled in the art.

## Claims

1. An apparatus for the manufacture of snack foods, the apparatus comprising a conveyor having an upstream end and a downstream end, a flat bed microwave apparatus for cooking products conveyed through the microwave apparatus by the conveyor, the microwave apparatus having an upstream end and a downstream end defining at least one elongate cavity therebetween and the conveyor extending through the at least one elongate cavity, the microwave apparatus being configured to define a plurality of successive independent microwave zones between the upstream and downstream ends of the microwave apparatus, each zone having a respective microwave attenuator at an upstream inlet and at a downstream outlet, the microwave zones comprising a first preheating zone located towards the upstream end of the microwave apparatus, at least one second explosive dehydration zone located downstream of the first preheating zone, and a third moisture levelling zone located downstream of the at least one second explosive dehydration zone, wherein the microwave apparatus is adapted respectively to provide first, second and third microwave power values to the respective first, second and third zones, the first microwave power value being lower than the second microwave power value.

2. An apparatus according to claim 1, wherein (i) in each of the second zones the second microwave power value is from 1.25 to 5 times, optionally from 1.5 to 4 times, further optionally from 1.5 to 2.5 times, higher than the first microwave power value, and/or (ii) in all of the second zones the total second microwave power value is from 2 to 8 times, optionally from 2.5 to 6 times, further optionally from 3 to 5 times, higher than the first microwave power value, and/or (iii) the second microwave power value is higher than the third microwave power value, and the second microwave power value is from 1.1 to 2 times, optionally from 1.25 to 1.75 times, further optionally about 1.5 times, higher than the third microwave power value, and/or (iv) the third microwave power value is higher than the first microwave power value, and the third microwave power value is from 1.5 to 2.5 times, optionally from 1.75 to 2.25 times, further optionally about 2 times, higher than the first microwave power value

3. An apparatus according to any foregoing claim, wherein the first, second and third zones are adjacent or abutting, and the zones are assembled in a common housing together with a common microwave generator, with waveguides adapted to transmit respective proportions of the microwave energy from the common microwave generator to the respective first, second and third zones.

4. An apparatus according to any foregoing claim, further comprising a fourth microwave drying zone located downstream of the third zone, optionally wherein the fourth drying zone has a fourth microwave power value which is lower than the first microwave power value, further optionally wherein the first microwave power value is from 1.25 to 2.5 times, optionally from 1.5 to 2.25 times, further optionally from 1.5 to 1.75 times, higher than the fourth microwave power value.

5. An apparatus according to claim 4, further comprising a second conveyor for conveying products through the fourth zone, the first-mentioned conveyor being arranged to deposit products on the second conveyor, optionally wherein the second conveyor is adapted to convey products at a higher mass flow rate than the first-mentioned conveyor, further optionally wherein the second conveyor has a speed control adapted, together with the length of the fourth zone, to convey products thereon through the fourth zone in a period of from 90 to 180 seconds, optionally from 100 to 150 seconds, further optionally about 120 seconds.

6. An apparatus according to any foregoing claim, wherein the conveyor through the microwave apparatus has a speed control adapted, together with the length of the first, second and third zones, to convey products thereon through the first, second and third zones in a total period of from 40 to 100 seconds, optionally from 70 to 90 seconds, further optionally about 80 seconds.

7. A potato chip manufacturing line including the apparatus of any foregoing claim.

8. A method for the manufacture of snack foods, the method comprising the steps of:
(a) conveying a plurality of products to form snack food products through a flat bed microwave apparatus, the microwave apparatus being configured to define a plurality of successive independent microwave zones between the upstream and downstream ends of the microwave apparatus, each zone having a respective microwave attenuator at an upstream inlet and at a downstream outlet of the respective zone;
(b) preheating the products in a first preheating microwave zone located towards an upstream end of the microwave apparatus, the first zone having a first microwave power value;
(c) explosively dehydrating the products in at least one second explosive dehydration microwave zone located downstream of the first preheating zone, the explosive dehydration drying a body of the products at a first drying rate, the second zone having a second microwave power value higher than the first microwave power value; and
(d) drying the products in a third drying microwave zone located downstream of the at least one second explosive dehydration zone.

9. A method according to claim 8, wherein in each of the second zones the second microwave power value is from 1.25 to 5 times, optionally from 1.5 to 4 times, further optionally from 1.5 to 2.5 times, higher than the first microwave power value, optionally wherein in all of the second zones the total second microwave power value is from 2 to 8 times, optionally from 2.5 to 6 times, further optionally from 3 to 5 times, higher than the first microwave power value.

10. A method according to claim 8 or claim 9, wherein the second microwave power value is higher than the third microwave power value, optionally wherein the third drying zone has a third microwave power value and the second microwave power value is from 1.1 to 2 times, optionally from 1.25 to 1.75 times, further optionally about 1.5 times, higher than the third microwave power value.

11. A method according to any one of claims 8 to 10, wherein the third drying zone has a third microwave power value and the third microwave power value is higher than the first microwave power value, optionally wherein the third microwave power value is from 1.5 to 2.5 times, optionally from 1.75 to 2.25 times, further optionally about 2 times, higher than the first microwave power value.

12. A method according to any one of claims 8 to 11, wherein (i) the first preheating zone has a microwave power output of from 0.05 to 0.3 kW, optionally 0.1 to 0.15 kW, further optionally about 0.14 kW, per kilogram of products per hour conveyed into the first preheating zone, and/or (ii) the second explosive dehydration zone has a microwave power output of from 0.15 to 0.35 kW, optionally 0.2 to 0.3 kW, further optionally about 0.25 kW, per kilogram of products per hour conveyed into the first preheating zone, and/or (iii) the third drying zone has a microwave power output of from 0.1 to 0.3 kW, optionally 0.15 to 0.25 kW, further optionally about 0.2 kW, per kilogram of products per hour conveyed into the first preheating zone.

13. A method according to any one of claims 8 to 12, wherein the first, second and third zones have a total microwave power output of from 0.5 to 1.1 kW, optionally 0.75 to 1.0 kW, further optionally about 0.8 kW, per kilogram of products per hour conveyed into the first preheating zone, optionally wherein the first, second and third zones have a ratio total microwave power output of about 1:6:2, optionally with there being plural second zones.

14. A method according to any one of claims 8 to 13, further comprising step (e) of drying the products in a fourth microwave drying zone located downstream of the third zone, optionally wherein the fourth drying zone has a fourth microwave power value which is lower than the first microwave power value, further optionally (a) wherein the first microwave power value is from 1.25 to 2.5 times, optionally from 1.5 to 2.25 times, further optionally from 1.5 to 1.75 times, higher than the fourth microwave power value, or (b) wherein the fourth zone has a microwave power output of from 0.4 to 0.12 kW, optionally 0.06 to 0.1 kW, further optionally about 0.08 kW, per kilogram of products per hour conveyed into the first preheating zone.

15. A method according to claim 14, wherein the products entering the fourth zone have a water content of from 10 to 15 wt% and the products leaving from the fourth zone have a water content of from 5 to 8 wt%, each weight being based on the total weight of the product including the respective water content, and further comprising a convector drying apparatus for drying the conveyed products downstream of the fourth zone, optionally wherein the products entering the convector drying apparatus have a water content of from 5 to 8 wt% and the products leaving from the convector drying apparatus have a water content of from 1 to 3 wt%, optionally from 1.5 to 2 wt%, each weight being based on the total weight of the product including the respective water content.

## Patentansprüche

1. Vorrichtung zur Herstellung von Snacks, wobei die Vorrichtung einen Förderer umfasst, der ein stromaufwärtiges Ende und ein stromabwärtiges Ende aufweist, wobei eine Flachbettmikrowellenvorrichtung zum Zubereiten von Produkten dient, die mit Hilfe des Förderers durch die Mikrowellenvorrichtung befördert werden, wobei die Mikrowellenvorrichtung ein stromaufwärtiges Ende und ein stromabwärtiges Ende aufweist und mindestens einen länglichen Hohlraum dazwischen definiert und sich der Förderer durch den mindestens einen länglichen Hohlraum erstreckt, wobei die Mikrowellenvorrichtung dafür konfiguriert ist, eine Vielzahl von aufeinanderfolgenden unabhängigen Mikrowellenzonen zwischen dem stromaufwärtigen und stromabwärtigen Ende der Mikrowellenvorrichtung zu definieren, wobei jede Zone einen jeweiligen Mikrowellendämpfer an einem stromaufwärtigen Einlass und einem stromabwärtigen Auslass aufweist, wobei die Mikrowellenzonen Folgendes umfassen: eine erste Vorwärmzone, die in Richtung des stromaufwärtigen Endes der Mikrowellenvorrichtung angeordnet ist, mindestens eine zweite Explosionsdehydratisierungszone, die stromabwärts von der ersten Vorwärmzone angeordnet ist, und eine dritte Feuchtigkeitsausgleichszone, die stromabwärts von der mindestens einen zweiten Explosionsdehydratisierungszone angeordnet ist, wobei die Mikrowellenvorrichtung dafür ausgelegt ist, der jeweiligen ersten, zweiten und dritten Zone jeweils einen ersten, zweiten und dritten Mikrowellenleistungswert bereitzustellen, wobei der erste Mikrowellenleistungswert niedriger ist als der zweite Mikrowellenleistungswert.

2. Vorrichtung nach Anspruch 1, wobei (i) in jeder der zweiten Zonen der zweite Mikrowellenleistungswert 1,25 bis 5 mal, optional 1,5 bis 4 mal, ferner optional 1,5 bis 2,5 mal höher ist als der erste Mikrowellenleistungswert und/oder (ii) in allen zweiten Zonen der zweite Gesamtmikrowellenleistungswert 2 bis 8 mal, optional 2,5 bis 6 mal, ferner optional 3 bis 5 mal höher ist als der erste Mikrowellenleistungswert und/oder (iii) der zweite Mikrowellenleistungswert höher ist als der dritte Mikrowellenleistungswert und der zweite Mikrowellenleistungswert 1,1 bis 2 mal, optional 1,25 bis 1,75 mal, ferner optional etwa 1,5 mal höher ist als der dritte Mikrowellenleistungswert und/oder (iv) der dritte Mikrowellenleistungswert höher ist als der erste Mikrowellenleistungswert und der dritte Mikrowellenleistungswert 1,5 bis 2,5 mal, optional 1,75 bis 2,25 mal, ferner optional etwa 2 mal höher ist als der erste Mikrowellenleistungswert.

3. Vorrichtung nach einem der vorhergehenden Ansprüche, wobei die erste, zweite und dritte Zone benachbart zueinander angeordnet sind oder aneinander anstoßen und die Zonen in einem gemeinsamen Gehäuse mit einem gemeinsamen Mikrowellengenerator angebracht sind, wobei Wellenleiter dafür ausgelegt sind, jeweilige Anteile der Mikrowellenenergie von dem gemeinsamen Mikrowellengenerator zu der jeweiligen ersten, zweiten und dritten Zone zu übertragen.

4. Vorrichtung nach einem der vorhergehenden Ansprüche, die ferner eine vierte Mikrowellentrocknungszone umfasst, die stromabwärts von der dritten Zone angeordnet ist, wobei die vierte Trocknungszone optional einen vierten Mikrowellenleistungswert aufweist, der niedriger ist als der erste Mikrowellenleistungswert, wobei ferner optional der erste Mikrowellenleistungswert 1,25 bis 2,5 mal, optional 1,5 bis 2,25 mal, ferner optional 1,5 bis 1,75 mal höher ist als der vierte Mikrowellenleistungswert.

5. Vorrichtung nach Anspruch 4, die ferner einen zweiten Förderer zum Befördern von Produkten durch die vierte Zone umfasst, wobei der zuerst erwähnte Förderer dafür ausgelegt ist, Produkte auf dem zweiten Förderer abzulegen, wobei der zweite Förderer optional dafür ausgelegt ist, Produkte mit einer höheren Massenflussrate als der zuerst erwähnte Förderer zu befödern, wobei ferner optional der zweite Förderer eine Geschwindigkeitssteuerung aufweist, die zusammen mit der Länge der vierten Zone dafür ausgelegt ist, darauf Produkte durch die vierte Zone in einem Zeitraum von 90 bis 180 Sekunden, optional 100 bis 150 Sekunden, ferner optional etwa 120 Sekunden, zu befördern.

6. Vorrichtung nach einem der vorhergehenden Ansprüche, wobei der Förderer durch die Mikrowellenvorrichtung eine Geschwindigkeitssteuerung aufweist, die zusammen mit der Länge der ersten, zweiten und dritten Zone dafür ausgelegt ist, darauf Produkte durch die erste, zweite und dritte Zone in einem Gesamtzeitraum von 40 bis 100 Sekunden, optional 70 bis 90 Sekunden, ferner optional etwa 80 Sekunden, zu befördern.

7. Kartoffelchips-Fertigungslinie, die die Vorrichtung nach einem der vorangegangenen Ansprüche umfasst.

8. Verfahren zur Herstellung von Snacks, wobei das Verfahren folgende Schritte umfasst:
(a) Befördern einer Vielzahl von Produkten zur Bildung von Snack-Produkten über eine Flachbettmikrowellenvorrichtung, wobei die Mikrowellenvorrichtung dafür konfiguriert ist, eine Vielzahl von aufeinanderfolgenden unabhängigen Mikrowellenzonen zwischen dem stromaufwärtigen und stromabwärtigen Ende der Mikrowellenvorrichtung zu definieren, wobei jede Zone einen jeweiligen Mikrowellendämpfer an einem stromaufwärtigen Einlass und einem stromabwärtigen Auslass der jeweiligen Zone aufweist,
(b) Vorwärmen der Produkte in einer ersten Vorwärmmikrowellenzone, die in Richtung eines stromaufwärtigen Endes der Mikrowellenvorrichtung angeordnet ist, wobei die erste Zone einen ersten Mikrowellenleistungswert aufweist;
(c) Explosionsdehydratisierung der Produkte in mindestens einer zweiten Explosionsdehydratisierungsmikrowellenzone stromabwärts von der ersten Vorwärmzone, wobei durch die Explosionstrocknung eine Produktmenge bei einer ersten Trocknungsgeschwindigkeit getrocknet wird, wobei die zweite Zone einen zweiten Mikrowellenleistungswert aufweist, der höher ist als der erste Mikrowellenleistungswert; und
(d) Trocknen der Produkte in einer dritten Trocknungsmikrowellenzone, die stromabwärts von der mindestens einen zweiten Explosionsdehydratisierungszone angeordnet ist.

9. Verfahren nach Anspruch 8, wobei in jeder der zweiten Zonen der zweite Mikrowellenleistungswert 1,25 bis 5 mal, optional 1,5 bis 4 mal, ferner optional 1,5 bis 2,5 mal höher ist als der erste Mikrowellenleistungswert, optional wobei in allen zweiten Zonen der zweite Gesamtmikrowellenleistungswert 2 bis 8 mal, optional 2,5 bis 6 mal, ferner optional 3 bis 5 mal höher ist als der erste Mikrowellenleistungswert.

10. Verfahren nach Anspruch 8 oder Anspruch 9, wobei der zweite Mikrowellenleistungswert höher ist als der dritte Mikrowellenleistungswert, wobei die dritte Trocknungszone optional einen dritten Mikrowellenleistungswert aufweist und der zweite Mikrowellenleistungswert 1,1 bis 2 mal, optional 1,25 bis 1,75 mal, ferner optional etwa 1,5 mal höher ist als der dritte Mikrowellenleistungswert.

11. Verfahren nach einem der Ansprüche 8 bis 10, wobei die dritte Trocknungszone einen dritten Mikrowellenleistungswert aufweist und der dritte Mikrowellenleistungswert höher ist als der erste Mikrowellenleistungswert und optional wobei der dritte Mikrowellenleistungswert 1,5 bis 2,5 mal, optional 1,75 bis 2,25 mal, ferner optional etwa 2 mal höher ist als der erste Mikrowellenleistungswert.

12. Verfahren nach einem der Ansprüche 8 bis 11, wobei (i) die erste Vorwärmzone eine Mikrowellenleistungsausgabe von 0,05 bis 0,3 kW, optional von 0,1 bis 0,15 kW, ferner optional von etwa 0,14 kW pro kg Produkt pro Stunde aufweist, das der ersten Aufwärmzone zugeführt wird, und/oder (ii) die zweite Explosionsdehydratisierungszone eine Mikrowellenleistungsausgabe von 0,15 bis 0,35 kW, optional von 0,2 bis 0,3 kW, ferner optional von etwa 0,25 kW pro kg Produkt pro Stunde aufweist, das der ersten Aufwärmzone zugeführt wird, und/oder (iii) die dritte Trocknungszone eine Mikrowellenleistungsausgabe von 0,1 bis 0,3 kW, optional von 0,15 bis 0,25 kW, ferner optional von etwa 0,2 kW pro kg Produkt pro Stunde aufweist, das der ersten Aufwärmzone zugeführt wird.

13. Verfahren nach einem der Ansprüche 8 bis 12, wobei die erste, zweite und dritte Zone eine Gesamtmikrowellenleistungsausgabe von 0,5 bis 1,1 kW, optional von 0,75 bis 1,0 kW, ferner optional von etwa 0,8 kW pro kg Produkt pro Stunde aufweist, das der ersten Aufwärmzone zugeführt wird, wobei optional die erste, zweite und dritte Zone ein Verhältnis der Gesamtmikrowellenleistungsausgabe von etwa 1:6:2 aufweisen, wobei optional mehrere zweite Zonen vorhanden sind.

14. Verfahren nach einem der Ansprüche 8 bis 13, das ferner Schritt (e) des Trocknens der Produkte in einer vierten Mikrowellentrocknungszone umfasst, die stromabwärts von der dritten Zone angeordnet ist, wobei die vierte Trocknungszone optional einen vierten Mikrowellenleistungswert aufweist, der niedriger ist als der erste Mikrowellenleistungswert, wobei ferner optional (a) der erste Mikrowellenleistungswert 1,25 bis 2,5 mal, optional 1,5 bis 2,25 mal, ferner optional 1,5 bis 1,75 mal höher ist als der vierte Mikrowellenleistungswert oder (b) wobei die vierte Zone eine Mikrowellenleistungsausgabe von 0,4 bis 0,12 kW, optional von 0,06 bis 0,1 kW, ferner optional von etwa 0,08 kW pro kg Produkt pro Stunde aufweist, das der ersten Aufwärmzone zugeführt wird.

15. Verfahren nach Anspruch 14, wobei die Produkte, die in die vierte Zone eintreten, einen Wassergehalt von 10 bis 15 Gew.-% aufweisen und die Produkte, die die vierte Zone verlassen, einen Wassergehalt von 5 bis 8 Gew.-% aufweisen, wobei jedes Gewicht auf dem Gesamtgewicht des Produkts einschließlich des jeweiligen Wassergehalts basiert und ferner eine Konvektortrocknungsvorrichtung zum Trocknen der beförderten Produkte stromabwärts von der vierten Zone vorhanden ist, wobei die Produkte, die in die Konvektortrocknungsvorrichtung eintreten, optional einen Wassergehalt von 5 bis 8 Gew.-% aufweisen und die Produkte, die die Konvektortrocknungsvorrichtung verlassen, einen Wassergehalt von 1 bis 3 Gew.-%, optional von 1,5 bis 2 Gew.-% aufweisen, wobei jedes Gewicht auf dem Gesamtgewicht des Produkts einschließlich des jeweiligen Wassergehalts basiert.

## Revendications

1. Appareil servant à produire des snacks, l'appareil doté d'un transporteur comportant une extrémité en amont et une extrémité en aval, d'un appareil à micro-ondes à plateau servant à la cuisson de produits transportés à travers l'appareil à micro-ondes par le transporteur, l'appareil à micro-ondes comportant une extrémité en amont et une extrémité en aval qui définissent au moins une cavité allongée entre elles et le transporteur s'étendant au moins à travers la cavité allongée, l'appareil à micro-ondes étant configuré de manière à définir une pluralité de zones successives et indépendantes à micro-ondes entre les extrémité amont et aval de l'appareil à micro-ondes, chaque zone comportant un atténuateur correspondant de micro-ondes à l'entrée en amont et à la sortie en aval, les zones à micro-ondes comprenant une première zone de préchauffage située vers l'extrémité amont de l'appareil à micro-ondes, au moins une deuxième zone de déshydratation explosive située en aval de la première zone de préchauffage, et une troisième zone d'égalisation de l'humidité située en aval de cette deuxième zone de déshydratation explosive, **caractérisé en ce que** l'appareil à micro-ondes est adapté de manière à fournir des première, deuxième et troisième puissances de micro-ondes respectivement aux première, deuxième et troisième zones, la première puissance des micro-ondes étant inférieure à la deuxième puissance des micro-ondes.

2. Appareil selon la revendication 1, **caractérisé en ce que** (i) dans chacune des deuxièmes zones, la deuxième puissance des micro-ondes est 1,25 à 5 fois plus élevée que la première puissance des micro-ondes, et optionnellement 1,5 à 4 fois plus élevée ou encore optionnellement 1,5 à 2,5 fois plus élevée que cette première puissance, et/ou (ii) dans toutes les deuxièmes zones, la deuxième puissance totale des micro-ondes est 2 à 8 fois plus élevée que la première puissance des micro-ondes, et optionnellement 2,5 à 6 fois plus élevée ou encore optionnellement 3 à 5 fois plus élevée que cette première puissance, et/ou (iii) la deuxième puissance des micro-ondes est plus élevée que la troisième puissance des micro-ondes, et la deuxième puissance des micro-ondes est 1,1 à 2 fois plus élevée que la troisième puissance des micro-ondes, et optionnellement 1,25 à 1,75 fois plus élevée ou encore optionnellement environ 1,5 fois plus élevée que cette troisième puissance, et/ou (iv) la troisième puissance des micro-ondes est plus élevée que la première puissance des micro-ondes, et la troisième puissance des micro-ondes est 1,5 à 2,5 fois plus élevée que la première puissance des micro-ondes, et optionnellement 1,75 à 2,25 fois plus élevée ou encore optionnellement environ 2 fois plus élevée que cette première puissance.

3. Appareil selon l'une quelconque des revendications précédentes, **caractérisé en ce que** les première, deuxième et troisième zones sont adjacentes ou en about les unes par rapport aux autres, et **en ce que** les zones sont assemblées dans un même carter avec un même générateur de micro-ondes, les guides d'ondes étant adaptés de manière à transmettre des proportions respectives de l'énergie des micro-ondes émanant du générateur de micro-ondes prévu en commun et aboutissant dans les première, deuxième et troisième zones respectives.

4. Appareil selon l'une quelconque des revendications précédentes, comportant par ailleurs une quatrième zone de séchage par micro-ondes située en aval de la troisième zone, caractérisé optionnellement en ce que, dans la quatrième zone de séchage, la quatrième puissance des micro-ondes est plus basse que la première puissance des micro-ondes, et encore optionnellement en ce que la première puissance des micro-ondes est 1,25 à 2,5 fois plus élevée que la quatrième puissance des micro-ondes, et optionnellement 1,5 à 2,25 fois plus élevée ou encore optionnellement 1,5 à 1,75 fois plus élevée que cette quatrième puissance.

5. Appareil selon la revendication 4, comportant par ailleurs un deuxième transporteur servant à faire avancer les produits à travers la quatrième zone, le premier transporteur mentionné étant utilisé pour placer les produits sur le deuxième transporteur, caractérisé optionnellement en ce que le deuxième transporteur est adapté de manière à faire avancer les produits à un débit massique plus élevé que le premier transporteur mentionné, caractérisé encore optionnellement en ce que le deuxième transporteur comporte un régulateur de vitesse qui est adapté, ainsi que la longueur de la quatrième zone, de manière à faire avancer les produits, sur ce deuxième transporteur, à travers la quatrième zone en une période comprise entre 90 et 180 secondes, et optionnellement comprise entre 100 et 150 secondes, ou encore optionnellement égale à 120 secondes environ.

6. Appareil selon l'une quelconque des revendications précédentes, **caractérisé en ce que** le transporteur qui passe à travers l'appareil à micro-ondes comporte un régulateur de vitesse qui est adapté, ainsi que la longueur des première, deuxième et troisième zones, de manière à faire avancer les produits, sur ce transporteur à travers les première, deuxième et troisième zones en une période totale comprise entre 40 et 100 secondes, et optionnellement comprise entre 70 et 90 secondes, ou encore optionnellement égale à 80 secondes environ.

7. Chaîne de production de chips y compris l'appareil selon l'une quelconque des revendications précédentes.

8. Procédé de production de snacks comprenant les étapes qui consistent :
(a) à faire avancer une pluralité de produits servant à produire des snacks à travers un appareil à micro-ondes à plateau, l'appareil à micro-ondes étant configuré de manière à définir une pluralité de zones successives et indépendantes à micro-ondes entre les extrémités amont et aval de l'appareil à micro-ondes, chaque zone comportant un atténuateur de micro-ondes respectif au niveau de l'entrée amont et de la sortie aval de la zone respective;
(b) à préchauffer les produits dans une première zone de préchauffage à micro-ondes située vers l'extrémité amont de l'appareil à micro-ondes, une première puissance des micro-ondes étant prévue dans la première zone;
(c) à déshydrater de manière explosive les produits dans au moins une deuxième zone de déshydratation explosive à micro-ondes située en aval de la première zone de préchauffage, la déshydratation explosive ayant pour effet de sécher un ensemble des produits à un premier taux de séchage, une deuxième puissance des micro-ondes étant prévue dans la deuxième zone, d'une valeur plus élevée que la première puissance des micro-ondes; et
(d) à sécher les produits dans une troisième zone de séchage par micro-ondes située en aval de la deuxième zone de déshydratation explosive qui est prévue en au moins un exemplaire.

9. Procédé selon la revendication 8, **caractérisé en ce que** dans chacune des deuxièmes zones, la deuxième puissance des micro-ondes est 1,25 à 5 fois plus élevée que la première puissance des micro-ondes, et optionnellement 1,5 à 4 fois plus élevée ou encore optionnellement 1,5 à 2,5 fois plus élevée que cette première puissance, caractérisé optionnellement **en ce que**, dans toutes les deuxièmes zones, la deuxième puissance totale des micro-ondes est 2 à 8 fois plus élevée que la première puissance des micro-ondes, et optionnellement 2,5 à 6 fois plus élevée ou encore optionnellement 3 à 5 fois plus élevée que cette première puissance.

10. Procédé selon la revendication 8 ou la revendication 9, **caractérisé en ce que** la deuxième puissance des micro-ondes est plus élevée que la troisième puissance des micro-ondes, caractérisé optionnellement **en ce qu'**une troisième puissance des micro-ondes est prévue dans la troisième zone de séchage, et **en ce que** la deuxième puissance des micro-ondes est 1,1 à 2 fois plus élevée que la troisième puissance des micro-ondes, et optionnellement 1,25 à 1,75 fois plus élevée ou encore optionnellement 1,5 fois environ plus élevée que cette troisième puissance.

11. Procédé selon l'une quelconque des revendications 8 à 10, **caractérisé en ce qu'**une troisième puissance des micro-ondes est prévue dans la troisième zone de séchage, et **en ce que** la troisième puissance des micro-ondes est plus élevée que la première puissance des micro-ondes, caractérisé optionnellement **en ce que** la troisième puissance des micro-ondes est est 1,5 à 2,5 fois plus élevée que la première puissance des micro-ondes, et optionnellement 1,75 à 2,25 fois plus élevée ou encore optionnellement 2 fois environ plus élevée que cette première puissance.

12. Procédé selon l'une quelconque des revendications 8 à 11, **caractérisé en ce que** (i) dans la première zone de préchauffage, la puissance des micro-ondes est comprise entre 0,05 et 0,3 kW, et optionnellement entre 0,1 et 0,15 kW, ou encore optionnellement égale à environ 0,14 kW pour chaque kilogramme de produits transportés toutes les heures dans la première zone de préchauffage, et/ou (ii) dans la deuxième zone de déshydratation explosive, la puissance des micro-ondes est comprise entre 0,15 et 0,35 kW, et optionnellement entre 0,2 et 0,3 kW, ou encore optionnellement égale à environ 0,25 kW pour chaque kilogramme de produits transportés toutes les heures dans la première zone de préchauffage, et/ou (iii) dans la troisième zone de préchauffage, la puissance des micro-ondes est comprise entre 0,1 et 0,3 kW, et optionnellement entre 0,15 et 0,25 kW, ou encore optionnellement égale à environ 0,2 kW pour chaque kilogramme de produits transportés toutes les heures dans la première zone de préchauffage.

13. Procédé selon l'une quelconque des revendications 8 à 12, **caractérisé en ce que** dans les première, deuxième et troisième zones, la puissance totale des micro-ondes est comprise entre 0,5 et 1,1 kW, et optionnellement entre 0,75 et 1,0 kW, ou encore optionnellement égale à environ 0,8 kW pour chaque kilogramme de produits transportés toutes les heures dans la première zone de préchauffage, caractérisé optionnellement **en ce que**, dans les première, deuxième et troisième zones, la puissance totale des micro-ondes est dans le rapport 1:6:2, une pluralité de deuxièmes zones étant prévue en option.

14. Procédé selon l'une quelconque des revendications 8 à 13, comportant par ailleurs l'étape (e) qui consiste à sécher les produits dans une quatrième zone de séchage par micro-ondes située en aval de la troisième zone, caractérisé optionnellement en ce que dans la quatrième zone de séchage, la quatrième puissance des micro-ondes est inférieure à la première puissance des micro-ondes, par ailleurs caractérisé optionnellement en ce que (a) la première puissance des micro-ondes est 1,25 à 2,5 fois plus élevée que la quatrième puissance des micro-ondes, et optionnellement 1,5 à 2,25 fois plus élevée ou encore optionnellement 1,5 à 1,75 fois plus élevée que cette quatrième puissance, ou (b) **caractérisé en ce que** dans la quatrième zone, la puissance des micro-ondes est comprise entre 0,4 et 0,12 kW, optionnellement entre 0,06 et 0,1 kW, ou encore optionnellement égale à environ 0,08 kW pour chaque kilogramme de produits transportés toutes les heures dans la première zone de préchauffage.

15. Procédé selon la revendication 14, **caractérisé en ce que** les produits qui pénètrent dans la quatrième zone ont une teneur en eau comprise entre 10 et 15% en poids, et **en ce que** les produits qui quittent la quatrième zone ont une teneur en eau comprise entre 5 et 8% en poids, ces valeurs étant chacune calculée sur la base du poids total du produit y compris la teneur en eau respective, et faisant appel par ailleurs à un appareil de séchage par convection qui sert à sécher les produits transportés en aval de la quatrième zone, caractérisé optionnellement **en ce que** les produits qui pénètrent dans l'appareil de séchage par convection ont une teneur en eau comprise entre 5 et 8% en poids, et **en ce que** les produits qui sortent de l'appareil de séchage par convection ont une teneur en eau comprise entre 1 et 3% en poids, et optionnellement entre 1,5 et 2% en poids, ces valeurs étant chacune calculée sur la base du poids total du produit y compris la teneur en eau respective,
